# EUROPEAN PATENT SPECIFICATION

(11) **EP 1 618 321 B1**
(45) Date of publication and mention of the grant of the patent: **21.02.2007**
(21) Application number: 04730931.5
(22) Date of filing: 03.05.2004
(51) Int. Cl.: F16H 61/00, B60K 25/02

(54) **ROAD VEHICLE WITH AUXILIARY INSTALLATION**
STRASSENFAHRZEUG MIT HILFSANLAGE
VEHICULE TERRESTRE A DISPOSITIF AUXILIAIRE

(30) Priority: 01.05.2003 NL 1023319
(43) Date of publication of application: 25.01.2006
(73) Proprietor: Govers, Henricus Johannes Antonius Alphonsus, 4861 PR Chaam (NL)
(72) Inventor: DE CLOE, Daniel, Jehudi, NL-5611 JZ Eindhoven (NL); LIEBRAND, Norbertus, Johannes, Josephus, 5595 EN Leende (NL); GOMMANS, Franciscus, Johannes, Josephus, 5662 TK Geldrop (NL)
(74) Representative: van Westenbrugge, Andries
(86) International application number: PCT/NL2004/000295
(87) International publication number: WO 2004/097264

(56) References cited:
- EP-A- 0 427 303
- WO-A-00/49313
- WO-A-01/47739
- DE-A- 2 213 303
- DE-A- 3 205 017
- US-A- 4 991 400
- US-B1- 6 179 739

## Description

The invention relates to a road vehicle, comprising a drive train with a combustion engine, a power generator, a transmission for driving the power generator by the combustion engine and an auxiliary installation that can be driven by the power generator.

DE-A-2 213 303, which is considered to constitute the closest prior art, discloses a road vehicle, comprising a drive train with a combustion engine a power generator , a transmission for driving the power generator by the combustion engine and an auxiliary installation that can be driven by the power generator, characterised in that the transmission comprises a continuously variable transmission with an input shaft') that is connected to the combustion engine and an output shaft that is connected to the power generator, control means for adjusting the transmission ratio of the continuously variable transmission and at least one sensor for detecting a characteristic of the auxiliary installation , which sensor is connected to the control means such that the continuously variable transmission can be controlled on the basis of the characteristic detected by said sensor.

Such a road vehicle is known. The power generator, which is driven by the combustion engine, usually a diesel engine, supplies power for driving the auxiliary installation. The power can have a voltage of, for example, 200 - 400 V; the auxiliary installation can be, for example, a refrigerating plant for cooling the refrigerated space in the road vehicle.

The auxiliary installation is usually not in continuous operation. In the case of a road vehicle with a refrigerated space, for example, the refrigerating plant has to be operated only at intervals, depending on the temperature in the refrigerated space. The refrigerating plant is therefore regularly switched on or off. This is associated with switching-on phenomena, which produce a relatively high stress and which consequently have an adverse effect on the life and performance.

The aim of the invention is to provide a road vehicle of the abovementioned type that does not have these disadvantages. Said aim is achieved in that the transmission comprises a continuously variable transmission with an input shaft that is connected to the combustion engine and an output shaft that is connected to the power generator, control means for adjusting the transmission ratio of the continuously variable transmission and at least one sensor for detecting a characteristic of the combustion engine, the continuously variable transmission, the power generator and/or the auxiliary installation, wherein each sensor is connected to the control means such that the continuously variable transmission can be controlled on the basis of the characteristic detected by the at least one sensor.

The electric motors of, for example, a sludge gulper, concrete mixer, fire-fighting installation, refrigerating plant and the like are mentioned as examples of the auxiliary installation.

The advantage of such a vehicle is that the start-up behaviour can be appreciably improved and can have more the nature of a "soft" start-up than of an abrupt start. In this context the following mode of operation can be employed:
- detection of the power demand for the auxiliary installation,
- lowering the transmission ratio and the speed of revolution of the output shaft of the continuously variable transmission if no demand or a low demand for power is detected,
- detection of a rise in the power demand,
- increasing the transmission ratio of the continuously variable transmission some time after detection of the rise in the power demand.

In particular, the mode of operation can comprise the following steps:
- detection of whether the auxiliary installation is switched on or switched off,
- lowering the transmission ratio and the speed of revolution of the output shaft of the continuously variable transmission on detecting that the auxiliary installation has been switched off.

The following steps can also be carried out:
- detection of whether the auxiliary installation is switched on or switched off,
- raising the transmission ratio and the speed of revolution of the output shaft of the continuously variable transmission on detecting that the auxiliary installation has been switched on.

In a known manner, the continuously variable transmission can have a drive pulley that is connected to the input shaft, a driven pulley that is connected to the output shaft, which pulleys each have two discs that enclose a V-shaped groove and that have a variable spacing, and a flexible endless member that is accommodated in the V-shaped grooves of the pulleys. The discs of the drive pulley can be movable towards one another and away from one another by means of an electromechanical actuator that is connected to the control means. The electromechanical actuator can comprise an electric motor and a threaded rod connected in a driveable manner thereto, which electric motor is connected to the control unit. The discs of the driven pulley can have pretensioning means for holding said discs pressed towards one another under spring pretension.

In connection with the control of the auxiliary installation, the pulleys can have sensors for determining the speed of revolution thereof. Furthermore, at least one of the pulleys can have a sensor for determining the position of one of the pulley discs.

As mentioned above, the auxiliary installation concerned can be, in particular, a refrigerating plant. In the case of the known refrigerating plants, the generator is connected directly to the crankshaft of the primary diesel engine of the lorry on which the refrigerated space has been mounted. As a consequence of this arrangement, the refrigeration capacity generated is linearly proportional to the speed of revolution of the engine. In this context, however, the fact that the refrigeration system works well only when the electric power supplied by the power generator has a voltage with a frequency that is within specific limits must be taken into account. The result of these preconditions is that the refrigeration system is switched off when the AC voltage supplied by the power generator has a frequency that is lower than 25 Hz. Furthermore, the speed of revolution of the power generator must remain below an upper limit of 4,500 revolutions per minute in order to keep the refrigeration system in operation.

In practice, this means that the refrigeration is switched off when the motor is idling or has a speed of revolution higher than 1,875 revolutions per minute. This is highly disadvantageous especially when in urban traffic: it is found that the refrigerating plant is then switched off for more than half the time. This is the more disadvantageous because it is precisely in urban traffic, and also in other traffic situations where there is a slow stream of traffic, such as when driving in traffic jams, that the need for refrigeration is extra high.

In connection with uniform, continuous operation of the refrigerating plant it is therefore desirable to generate an electric current that has an essentially constant frequency and voltage. This means that the power generator has to be driven at an essentially constant speed of revolution of preferably 3,000 revolutions per minute. This is achieved by the steps for setting the step for a constant speed of revolution of the output shaft after increasing the speed of revolution of the output shaft.

As an alternative, the transmission ratio, after the "soft" start, can be adapted to the power demand of the auxiliary installation. This can be achieved by the step of matching the speed of revolution of the output shaft to the power demand of the auxiliary installation, after increasing the speed of revolution of the output shaft.

In the case of the refrigerating plant according to the invention, the refrigeration capacity can be kept virtually constant throughout the entire transport cycle. The speed of revolution of the generator can, for example, be kept at 3,000, with a margin of 15. The advantage of this is, furthermore, that the specific fuel consumption (BSFC) is reduced. To a significant extent this is caused by the fact that with the refrigeration system according to the invention use can be made of the relatively high power that a diesel engine has at low speeds of revolution. In the state of the art no power is taken off by the refrigerating plant at such low speeds of revolution: it is precisely then that this installation is switched off.

It is true that the fuel consumption increases somewhat with the refrigeration system according to the invention, but this is counteracted by a significant increase in the refrigeration capacity of, for example, more than 100 % in the case of urban traffic. A further advantage of the virtually constant speed of revolution of the generator is that the noise produced is less and more uniform and there are no noise peaks.

Such a road vehicle can provide continuous operation of the refrigeration system by means of a method comprising the following steps:
- entering a desired output speed of revolution for the continuously variable transmission,
- detection of the input speed of revolution of the continuously variable transmission,
- adjusting the transmission ratio of the continuously variable transmission by means of the control device such that the output speed of revolution is essentially the same as the desired output speed of revolution.

The preference here is to maintain the output speed of revolution at essentially 3,000 revolutions per minute; furthermore, the voltage supplied by the generator can be kept at essentially 400 volt and the frequency of the AC voltage supplied by the generator at essentially 50 Hz.

According to a further improvement of the operation of the refrigerating plant, a control strategy can be used comprising the following steps:
- detection of the operating state of the refrigerating plant,
- adjustment of the desired output speed of revolution to 1,850 if it is detected that the refrigerating plant has been switched off.

Lower start-up currents and start-up torques are obtained by means of such a control strategy. As a result, the entire start-up behaviour is improved, which leads to more favourable loading and a longer life of the entire refrigerating plant.

According to the invention, the control strategy comprises the insertion of a delay time, for example of 5 seconds, between the time when switching on of the refrigerating plant is detected and the adjustment of the output speed of revolution.

The drive installation according to the invention can furthermore be used in a wide variety of fields other than in the case of road vehicles with the abovementioned sludge gulper and the like. Thus, the drive installation can form part of a windmill or water mill, where the sails or the blades, respectively, form the drive source that feeds the generator in a specific desired manner via the adjustable transmission. In this case the sensor(s) can determine one or more parameters, such as speed of revolution of the blades, wind speed or water speed and the like.

The invention will be explained in more detail below with reference to the figures.
Figure 1 shows a block diagram of the drive installation according to the invention.
Figure 2 shows a general embodiment of a refrigeration system with a drive installation according to the invention.
Figure 3 shows the continuously variable transmission of the drive installation in more detail.
Figure 4 shows experimental results relating to the speed of revolution of the generator.
Figure 5 shows experimental results relating to the voltage and the current strength.

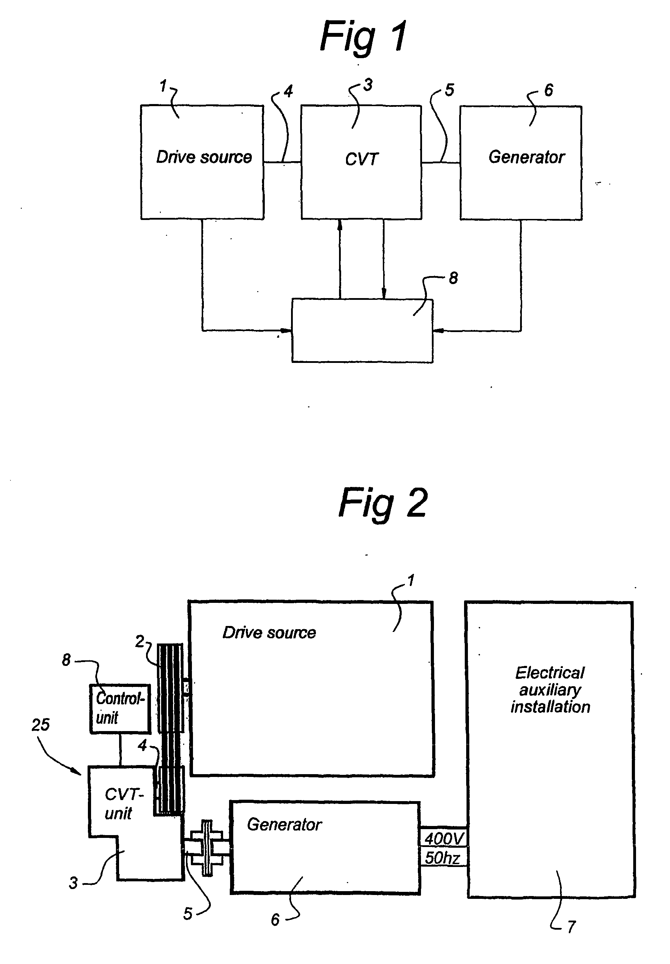

A general diagram of the drive installation according to the invention with a drive source 1, the continuously variable transmission 3, the electrical power generator 6 and the control unit 8 is shown in Figure 1. This control unit 8 can, as is indicated by the lines with arrows, receive signals from sensors that are on one or more of the drive source 1, continuously variable transmission 3 or power generator 6. The control unit 8 adjusts the transmission ratio of the continuously variable transmission on the basis of these signals, as is likewise indicated by the line provided with an arrow.

Such a drive installation can be used in a wide variety of fields. According to a first possibility, the drive installation can form part of a refrigeration system as shown in Figure 2. This refrigeration system according to the invention is fitted on a road vehicle, the primary diesel engine 1 of which is shown in Figure 2.

This primary engine drives the input shaft 4 of the continuously variable transmission, indicated in its entirety by 3, via the belt transmission 2. The output shaft 5 of the transmission is coupled to an electric power generator 6, which, in turn, drives the electric refrigeration unit 7. The continuously variable transmission 3 is controlled by means of the control unit 8, which receives signals from sensors fitted on the continuously variable transmission 3.

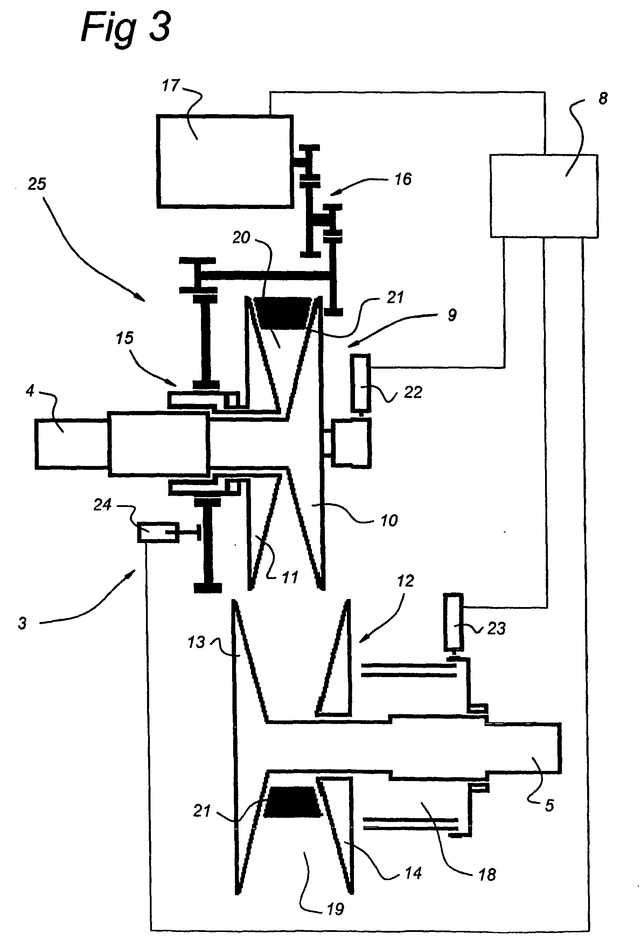

The transmission 3 and the control unit 8 together form the transmission 25, as is indicated in Figure 3. In this Figure 3 the continuously variable transmission 3 is shown diagrammatically. The primary pulley, which is indicated in its entirety by 9 and comprises a fixed disc 10 and a disc 11 that can be moved axially, is mounted on the input shaft 4 thereof. The secondary pulley, which is indicated in its entirety by 12 and has a fixed disc 13 and a disc 14 that can be moved axially, is mounted on the output shaft 5.

The disc 11 of the primary pulley 9 can be moved by means of the screw actuator 15. This screw actuator is coupled via a gear system 16 to the electric motor 17. The movable disc 14 of the secondary pulley 12 is held continuously pressed towards the fixed disc 13 under spring pretension by means of spring means 18. With this arrangement, the flexible member 21 extending in the V-shaped grooves 20, 19 of the pulleys 9, 12 is firmly clamped, such that a torque can be transmitted.

The electric motor 17 is controlled by the control unit 8, which receives signals from the revolution sensors 22, 23 on the primary and secondary pulleys 9, 12, as well as from the position sensor 24 on the primary pulley 9.

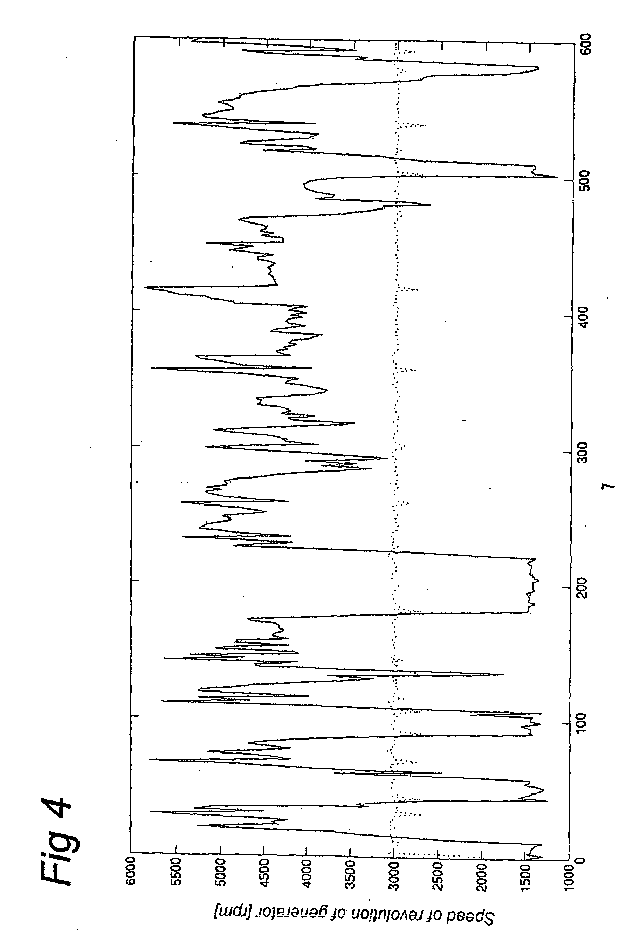

The control unit 8 is so programmed that the speed of revolution of the output shaft of the continuously variable transmission can be kept constant for a varying speed of revolution of the input shaft 4. A comparison of the speed of revolution of a power generator 6 controlled in this way, shown by means of the continuous line, compared with a generator according to the state of the art that is connected directly to the crankshaft of the combustion engine, shown by means of the broken line, is shown in Figure 4. The combustion engine was driven in accordance with a standardised urban driving cycle (ETC, European Transient Cycle).

It can be seen from Figure 4 that with such a cycle the generator driven according to the invention can be kept at 3,000 revolutions per minute during virtually the entire transport cycle, whereas the generator driven according to the state of the art shows substantial fluctuations in speed of revolution. In this context it must be borne in mind that in the case of the generator according to the state of the art the refrigeration system had to be switched off as soon as the frequency of the voltage supplied by the generator fell below 25 Hz or the speed of revolution of the generator exceeded 4,500 revolutions. It can be seen from this as well that the known refrigeration system was not able to operate for a significant proportion of the transport cycle, whereas the refrigeration system according to the invention supplied refrigeration capacity throughout the entire time.

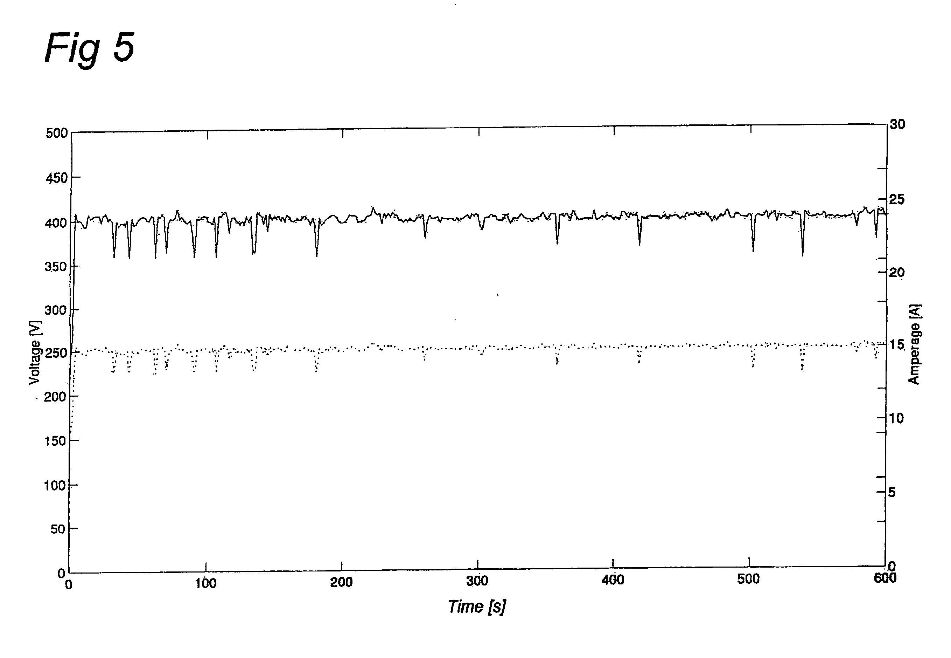

In Figure 5 it is shown that the voltage and current strength supplied by the generator of the refrigeration system according to the invention have a constant nature.

Furthermore, the experiments show that the refrigeration system according to the invention has the following favourable characteristics. In the case of the known power generator, which exceeds a speed of revolution of 4,500, a voltage of 500 volt is supplied, which causes the compressor and fans of the refrigeration system to run at high speeds of revolution. The noise emission consequently increases to a maximum measured value of 81 dB(A).

In the case of the refrigeration system according to the invention, provision was made that the speed of revolution of the power generator remained below 3,100, which gave a maximum measured noise emission of 63 dB(A). These measurements were carried out in refrigerated transport without sound insulation and can therefore be even lower if such insulation is used.

Furthermore, the experiments show that the refrigeration capacity generated with the refrigeration system according to the invention is appreciably higher (0.67 kWh) than in the case of the known refrigeration system that has to be switched off regularly (0.23 kWh).

Instead of an electromechanical actuator, the continuously variable transmission can also have a different actuator, for example a hydraulic actuator.

## Claims

1. Road vehicle, comprising a drive train with a combustion engine (1), a power generator (6), a transmission (25) for driving the power generator (6) by the combustion engine (1) and a refrigeration plant (7) that can be driven by the power generator, wherein the transmission (25) comprises a continuously variable transmission (3) with an input shaft (4) that is connected to the combustion engine (I) and an output shaft (5) that is connected to the power generator (6), control means (8) for adjusting the transmission ratio of the continuously variable transmission (3) and at least one sensor for detecting a characteristic of refrigeration plant (7), which sensor is connected to the control means (8) such that the continuously variable transmission (3) can be controlled on the basis of the characteristic detected by said sensor, wherein the control means (8) are programmed for insertion of a delay time between the point in time when switching on of the refrigeration plant is detected, and an adjustment of the speed of revolution of the output shaft (5) of the transmission (21), by an increase of the transmission ratio of the continuously variable transmission.

2. Road vehicle according to Claim 1, wherein the control means (8) are designed to maintain an essentially constant speed of revolution at the output shaft (5) of the continuously variable transmission (3).

3. Road vehicle according to Claim 1 or 2, wherein the continuously variable transmission (3) has a drive pulley (9) that is connected to the input shaft (4), a driven pulley (12) that is connected to the output shaft (5), which pulleys (9, 12) each have two discs (10, 11; 13, 14) that enclose a V-shaped groove (19, 20) and that have a variable spacing, and a flexible endless member (21) that is accommodated in the V-shaped grooves (19, 20) of the pulleys (9, 12).

4. Road vehicle according to Claim 3, wherein the discs (10, 11) of the drive pulley (9) can be moved towards one another and away from one another by means of an actuator (15, 17) that is connected to the control means (8).

5. Road vehicle according to Claim 4, wherein the actuator comprises an electric motor (17) and a threaded rod (15) connected in a driveable manner thereto, which electric motor (17) is connected to the control means (8).

6. Road vehicle according to Claim 3, 4 or 5, wherein the discs (13, 14) of the driven pulley (12) have pretensioning means (18) for holding said discs (13, 14) pressed towards one another under spring pretension.

7. Road vehicle according to one of Claims 3 - 6, wherein at least one pulley (9, 12) has a sensor (22, 23) for determining the speed of revolution thereof.

8. Road vehicle according to one of Claims 3 - 7, wherein at least one (9) of the pulleys has a sensor (24) for determining the position of the pulley discs (10, 11).

9. Method for the operation of the road vehicle according to one of the preceding claims, said road vehicle comprising a drive train with a combustion engine (1), a power generator (6), a transmission (25) for driving the power generator (6) by the combustion engine (1) and a refrigeration plant that can be driven by the power generator, wherein the transmission (25) comprises a continuously variable transmission (3) with an input shaft (4) that is connected to the combustion engine (1) and an output shaft (5) that is connected to the power generator (6), control means (8) for adjusting the transmission ratio of the continuously variable transmission (3) and at least one sensor for detecting a characteristic of the refrigeration plant (7), which sensor is connected to the control means (8) such that the continuously variable transmission (3) can be controlled on the basis of the characteristic detected by said sensor, said method comprising the following steps:
- detection of the power demand for the refrigeration plant (7),
- lowering the transmission ratio and the speed of revolution of the output shaft (5) of the continuously variable transmission (3) if no demand or a low demand for power is detected,
- detection of a rise in the power demand,
- increasing the transmission ratio of the continuously variable transmission (3) some time after detection of the rise in the power demand, wherein a delay time is inserted between the point in time when switching on of the refrigerating plant is detected, and the adjustment of the speed of revolution of the output shaft (5) of the transmission (25).

10. Method according to Claim 9, comprising the following steps:
- detection of whether the refrigeration plant is switched on or switched off,
- lowering the transmission ratio and the speed of revolution of the output shaft of the continuously variable transmission on detecting that the refrigeration plant has been switched off.

11. Method according to Claim 9 or 10, comprising the following steps:
- detection of whether the refrigeration plant is switched on or switched off,
- raising the transmission ratio and the speed of revolution of the output shaft of the continuously variable transmission on detecting that the refrigeration plant has been switched on.

12. Method according to Claim 11, comprising the step of setting a constant speed of revolution of the output shaft after increasing the speed of revolution of the output shaft.

13. Method according to Claim 11, comprising the step of matching the speed of revolution of the output shaft to the power demand of the refrigeration plant after increasing the speed of revolution of the output shaft.

14. Method according to one of Claims 9-13, comprising maintaining the voltage supplied by the power generator at essentially 400 volt.

15. Method according to one of Claims 9 - 14, comprising maintaining the frequency of the AC voltage supplied by the power generator at essentially 50 Hz.

16. Method according to one of Claims 9 - 15 for operating a refrigerating plant, comprising adjusting the speed of revolution of the output shaft to 1,850 if it has been detected that the refrigeration plant has been switched off.

17. Method according to one of Claims 9 - 16, comprising adjusting the speed of revolution of the output shaft to 3,000 if it has been detected that the refrigeration plant has been switched on.

18. Method according to one of Claims 9 - 17, comprising the insertion of a delay time, for example of 5 seconds, between the point in time when switching on of the refrigeration plant is detected and the adjustment of the speed of revolution of the output shaft.

## Patentansprüche

1. Straßenfahrzeug, umfassend einen Antriebsstrang mit einer Verbrennungsmaschine (1), ein Stromaggregat (6), ein Getriebe (25), um das Stromaggregat (6) durch die Verbrennungsmaschine (1) anzutreiben, und ein Kühlsystem (7), das durch das Stromaggregat angetrieben werden kann, wobei das Getriebe (25) umfasst ein kontinuierlich variables Getriebe (3) mit einer Antriebswelle (4), die mit der Verbrennungsmaschine (1) verbunden ist, und einer Abtriebswelle (5), die mit dem Stromaggregat (6) verbunden ist, Steuerungsmittel (8), um das Übersetzungsverhältnis des kontinuierlich variablen Getriebes (3) einzustellen, und zumindest einen Sensor, um eine Charakteristik des Kühlsystems (7) wahrzunehmen, wobei der Sensor mit dem Steuerungsmittel (8) verbunden ist, so dass das kontinuierlich variable Getriebe (3) auf der Grundlage der durch den Sensor wahrgenommenen Charakteristik gesteuert werden kann, wobei die Steuerungsmittel (8) programmiert sind zum Einfügen einer Zeitverzögerung zwischen dem Zeitpunkt, wenn ein Einschalten des Kühlsystems wahrgenommen wird, und einer Anpassung der Drehzahl der Abtriebswelle (5) des Getriebes (21) durch Erhöhen des Übersetzungsverhältnisses des kontinuierlich variablen Getriebes.

2. Straßenfahrzeug nach Anspruch 1, wobei die Steuerungsmittel (8) gestaltet sind, um eine im Wesentlichen konstante Drehzahl an der Abtriebswelle (5) des kontinuierlich variablen Getriebes (3) zu erhalten.

3. Straßenfahrzeug nach Anspruch 1 oder 2, wobei das kontinuierlich variable Getriebe (3) eine Antriebsscheibe (9) hat, die mit der Antriebswelle (4) verbunden ist, eine angetriebene Scheibe (12), die mit der Abtriebswelle (5) verbunden ist, wobei die Scheiben (9, 12) jeweils zwei Teller (10, 11; 13, 14) aufweisen, die eine V-förmige Nut (19, 20) umfassen und die einen variablen Zwischenraum haben, und ein flexibles, endloses Element (21), das in der V-förmigen Nut (19, 20) der Scheiben (9, 12) untergebracht ist.

4. Straßenfahrzeug nach Anspruch 3, wobei die Teller (10, 11) der Antriebsscheibe (9) zueinander und voneinander weg bewegt werden können durch eine Stelleinheit (15, 17), der mit den Steuerungsmitteln (8) verbunden ist.

5. Straßenfahrzeug nach Anspruch 4, wobei die Stelleinheit einen elektrischen Motor (17) und eine Gewindestange (15) umfasst, die in antreibbarer Weise damit verbunden ist, wobei der Elektromotor (17) mit den Steuerungsmitteln (8) verbunden ist.

6. Straßenfahrzeug nach Anspruch 3, 4 oder 5, wobei die Teller (13, 14) der angetriebenen Scheibe (12) Vorspannungsmittel (18) haben, um die Teller (13, 14) durch eine Federvorspannung zueinander gepresst zu halten.

7. Straßenfahrzeug nach einem der Ansprüche 3-6, wobei zumindest eine Scheibe (9, 12) einen Sensor (22, 23) aufweist, um davon die Drehzahl zu bestimmen.

8. Straßenfahrzeug nach einem der Ansprüche 3-7, wobei zumindest eine (9) der Scheiben einen Sensor (24) aufweist, um die Position der Scheibenteller (10, 11) zu bestimmen.

9. Betriebsverfahren des Straßenfahrzeugs nach einem der vorangegangenen Ansprüche, wobei das Straßenfahrzeug umfassend einen Antriebsstrang mit einer Verbrennungsmaschine (1), ein Stromaggregat (6), ein Getriebe (25), um das Stromaggregat (6) durch die Verbrennungsmaschine (1) anzutreiben, und ein Kühlsystem, das durch das Stromaggregat angetrieben werden kann, wobei das Getriebe (25) ein kontinuierlich variables Getriebe (3) umfasst mit einer Antriebswelle (4), die mit der Verbrennungsmaschine (1) verbunden ist, und einer Abtriebswelle (5), die mit dem Stromaggregat (6) verbunden ist, Steuerungsmittel (8), um das Übersetzungsverhältnis des kontinuierlich variablen Getriebes (3) einzustellen, und zumindest einen Sensor, um eine Charakteristik des Kühlsystems (7) zu erkennen, wobei der Sensor mit den Steuerungsmitteln (8) verbunden ist, so dass das kontinuierlich variable Getriebe (3) auf der Grundlage der durch den Sensor erkannten Charakteristik gesteuert werden kann, wobei das Verfahren die folgenden Schritte umfasst:
- Erkennen des Leistungsbedarfs für das Kühlsystem (7),
- Absenken des Übersetzungsverhältnisses und der Drehzahl der Abtriebswelle (5) des kontinuierlich variablen Getriebes (3), wenn kein oder ein geringerer Leistungsbedarf erkannt wird,
- Erkennen eines Anstiegs des Leistungsbedarfs,
- Zunahme des Übersetzungsverhältnisses des kontinuierlich variablen Getriebes (3) einige Zeit nach dem Erkennen des Anstiegs des Leistungsbedarfs, wobei eine Zeitverzögerung eingefügt wird zwischen dem Zeitpunkt, wenn das Einschalten des Kühlsystems erkannt wird, und der Anpassung der Drehzahl der Abtriebswelle (5) des Getriebes (25).

10. Verfahren nach Anspruch 9, umfassend die folgenden Schritte:
- Erkennen, ob das Kühlsystem ein- oder ausgeschaltet ist,
- Absenken des Übersetzungsverhältnisses und der Drehzahl der Abtriebswelle des kontinuierlich variablen Getriebes, wenn erkannt wird, dass das Kühlsystem ausgeschaltet wurde.

11. Verfahren nach Anspruch 9 oder 10, umfassend die folgenden Schritte:
- Erkennen, ob das Kühlsystem ein- oder ausgeschaltet ist,
- Erhöhen des Übersetzungsverhältnisses und der Drehzahl der Abtriebswelle des kontinuierlich variablen Getriebes, wenn erkannt wird, dass das Kühlsystem eingeschaltet wurde.

12. Verfahren nach Anspruch 11, umfassend den Schritt, eine konstante Drehzahl der Abtriebswelle zu setzen, nachdem die Drehzahl der Abtriebswelle erhöht wurde.

13. Verfahren nach Anspruch 11, umfassend den Schritt, die Drehzahl der Abtriebswelle an den Leistungsbedarf des Kühlsystems anzupassen, nachdem die Drehzahl der Abtriebswelle erhöht wurde.

14. Verfahren nach einem der Ansprüche 9-13, umfassend, dass die durch das Stromaggregat gelieferte Spannung bei im Wesentlichen 400 Volt gehalten wird.

15. Verfahren nach einem der Ansprüche 9-14, umfassend, dass die Frequenz der durch das Stromaggregat gelieferte AC-Spannung bei im Wesentlichen 50 Hz gehalten wird.

16. Verfahren nach einem der Ansprüche 9-15 zum Betrieb eines Kühlsystems, umfassend das Anpassen der Drehzahl der Abtriebswelle an 1.850, wenn erkennt wurde, dass das Kühlsystem ausgeschaltet wurde.

17. Verfahren nach einem der Ansprüche 9-16, umfassend das Einstellen der Drehzahl der Abtriebswelle auf 3.000, wenn erkannt wurde, dass das Kühlsystem eingeschaltet wurde.

18. Verfahren nach einem der Ansprüche 9-17, umfassend das Einfügen einer Zeitverzögerung, z.B. von 5 Sekunden, zwischen dem Zeitpunkt, wenn das Einschalten des Kühlsystems erkannt wird, und dem Anpassen der Drehzahl der Abtriebswelle.

## Revendications

1. Véhicule terrestre comprenant un train d'entraînement avec un moteur à combustion (1), un générateur d'électricité (6), une transmission (25) pour entraîner le générateur d'électricité (6) par le moteur à combustion (1), et une centrale de réfrigération (7) qui peut être entraînée par le générateur d'électricité, véhicule dans lequel la transmission (25) comprend une transmission à variation continue (3) avec un arbre d'entrée (4) qui est relié au moteur à combustion (1) et un arbre de sortie (5) qui est relié au générateur d'électricité (6), des moyens de commande (8) permettant d'ajuster le rapport de transmission de la transmission à variation continue (3), et au moins un capteur pour détecter une caractéristique de la centrale de réfrigération (7), lequel capteur est connecté aux moyens de commande (8) de sorte que la transmission à variation continue (3) puisse être commandée en fonction de la caractéristique détectée par ledit capteur, et dans lequel lesdits moyens de commande (8) sont programmés pour insérer un temps de retard entre le moment où le démarrage de la centrale de réfrigération est détecté, et un ajustement de la vitesse de révolution de l'arbre de sortie (5) de la transmission (21) par une augmentation du rapport de transmission de la transmission à variation continue.

2. Véhicule terrestre selon la revendication 1, dans lequel les moyens de commande (8) sont conçus de manière à maintenir une vitesse de révolution essentiellement constante au niveau de l'arbre de sortie (5) de la transmission à variation continue (3).

3. Véhicule terrestre selon la revendication 1 ou 2, dans lequel la transmission à variation continue (3) comprend une poulie d'entraînement (9) qui est reliée à l'arbre d'entrée (4), une poulie entraînée (12) qui est reliée à l'arbre de sortie (5), lesquelles poulies (9, 12) comportent chacune deux disques (10, 11 ; 13 , 14) qui entourent une gorge en forme de V (19, 20) et qui ont un espacement variable, ainsi qu'un élément sans fin flexible (21) qui vient se loger dans les gorges en forme de V (19, 20) des poulies (9, 12).

4. Véhicule terrestre selon la revendication 3, dans lequel les disques (10, 11) de la poulie d'entraînement (9) peuvent se rapprocher l'un de l'autre ou s'écarter l'un de l'autre à l'aide d'un actionneur (15, 17) qui est relié aux moyens de commande (8).

5. Véhicule terrestre selon la revendication 4, dans lequel l'actionneur comprend un moteur électrique (17) et une tige filetée (15) reliée à celui-ci afin d'être entraînée, lequel moteur électrique (17) est relié aux moyens de commande (8).

6. Véhicule terrestre selon la revendication 3, 4 ou 5, dans lequel les disques (13, 14) de la poulie entraînée (12) comportent des moyens de pré-tension (18) pour maintenir lesdits disques (13, 14) pressés l'un vers l'autre sous l'effet de la pré-tension d'un ressort.

7. Véhicule terrestre selon l'une des revendications 3 à 6, dans lequel au moins une poulie (9, 12) comporte un capteur (22, 23) pour déterminer sa vitesse de révolution.

8. Véhicule terrestre selon l'une des revendications 3 à 7, dans lequel au moins une (9) des poulies comporte un capteur (24) pour déterminer la position des disques de poulie (10, 11).

9. Procédé de fonctionnement d'un véhicule terrestre selon l'une quelconque des revendications précédentes, lequel véhicule terrestre comprend un train d'entraînement avec un moteur à combustion (1), un générateur d'électricité (6), une transmission (25) pour entraîner le générateur d'électricité (6) par le moteur à combustion (1), et une centrale de réfrigération (7) qui peut être entraînée par le générateur d'électricité, dans lequel la transmission (25) comprend une transmission à variation continue (3) avec un arbre d'entrée (4) qui est relié au moteur à combustion (1) et un arbre de sortie (5) qui est relié au générateur d'électricité (6), des moyens de commande (8) permettant d'ajuster le rapport de transmission de la transmission à variation continue (3), et au moins un capteur pour détecter une caractéristique de la centrale de réfrigération (7), lequel capteur est relié aux moyens de commande (8) de sorte que la transmission à variation continue (3) puisse être commandée en fonction de la caractéristique détectée par ledit capteur, lequel procédé comprend les étapes suivantes :
- détecter la demande en électricité de la centrale de réfrigération (7) ;
- abaisser le rapport de transmission et la vitesse de révolution de l'arbre de sortie (5) de la transmission à variation continue (3) si aucune demande ou si une demande faible en électricité est détectée ;
- détecter une augmentation de la demande en électricité ; et
- augmenter le rapport de transmission de la transmission à variation continue (3) quelque temps après la détection de l'augmentation de la demande en électricité, un temps de retard étant inséré entre le moment où le démarrage de la centrale de réfrigération est détecté, et l'ajustement de la vitesse de révolution de l'arbre de sortie (5) de la transmission (25).

10. Procédé selon la revendication 9, comprenant les étapes suivantes :
- détecter si la centrale de réfrigération est en marche ou à l'arrêt ; et
- abaisser le rapport de transmission et la vitesse de révolution de l'arbre de sortie de la transmission à variation continue lorsque l'on détecte que la centrale de réfrigération a été arrêtée.

11. Procédé selon la revendication 9 ou 10, comprenant les étapes suivantes :
- détecter si la centrale de réfrigération est en marche ou à l'arrêt ; et
- augmenter le rapport de transmission et la vitesse de révolution de l'arbre de sortie de la transmission à variation continue lorsque l'on détecte que la centrale de réfrigération a été mise en marche.

12. Procédé selon la revendication 11, comprenant une étape consistant à établir une vitesse de révolution constante de l'arbre de sortie après avoir augmenté la vitesse de révolution de l'arbre de sortie.

13. Procédé selon la revendication 11, comprenant une étape consistant à faire correspondre la vitesse de révolution de l'arbre de sortie à la demande en électricité de la centrale de réfrigération après avoir augmenté la vitesse de révolution de l'arbre de sortie.

14. Procédé selon l'une quelconque des revendications 9 à 13, comprenant le maintien de la tension fournie par le générateur d'électricité à essentiellement 400 volts.

15. Procédé selon l'une quelconque des revendications 9 à 14, comprenant le maintien de la fréquence de la tension de courant alternatif fournie par le générateur d'électricité à essentiellement 50 Hz.

16. Procédé, selon l'une quelconque des revendications 9 à 15, de fonctionnement d'une centrale de réfrigération, comprenant l'ajustement de la vitesse de révolution de l'arbre de sortie à 1850 tours/minute si l'on a détecté que la centrale de réfrigération a été arrêtée.

17. Procédé selon l'une quelconque des revendications 9 à 16, comprenant l'ajustement de la vitesse de révolution de l'arbre de sortie à 3000 tours/minute si l'on a détecté que la centrale de réfrigération a été mise en marche.

18. Procédé selon l'une quelconque des revendications 9 à 17, comprenant l'insertion d'un temps de retard, par exemple de 5 secondes, entre le moment où le démarrage de la centrale de réfrigération est détecté, et l'ajustement de la vitesse de révolution de l'arbre de sortie.
